# FASCICULE DE BREVET EUROPEEN

(11) **EP 0 289 436 B1**
(45) Date de publication et mention de la délivrance du brevet: **22.06.1994**
(21) Numéro de dépôt: 88420136.9
(22) Date de dépôt: 22.04.1988
(51) Int. Cl.: G01N 17/00

(54) **Dispositif de photovieillissement accéléré de matériaux contenant des matières polymères**
Vorrichtung zur beschleunigten Alterung mittels optischer Bestrahlung von Polymere enthaltendem Material
Device for the accelerated aging of materials containing polymers by optical radiation

(30) Priorité: 28.04.1987 FR 8706216
(43) Date de publication de la demande: 02.11.1988
(73) Titulaire: UNIVERSITE DE CLERMONT II LABORATOIRE DE PHOTOCHIMIE, F-63170 Aubière (FR)
(72) Inventeur: Arnaud, René, F-63000 Clermont-Ferrand (FR); Gardette, Jean-Luc, F-63170 Aubière (FR); Lemaire Jacques, F-63110 Beaumont (FR)
(74) Mandataire: Derambure, Christian

(56) Documents cités:
- DE-A- 3 310 631
- FR-A- 2 430 609
- GB-A- 429 792
- US-A- 3 224 266
- US-A- 3 886 791
- PATENT ABSTRACTS OF JAPAN, vol. 10, no. 195 (P-475)[2251], 9 juillet 1986; & JP-A-61 38 446 (NIPPON OIL & FATS CO. LTD) 24-02-1986

## Description

L'invention concerne un dispositif de photovieillissement accéléré de matériaux contenant des matières polymères , dispositif permettant de mesurer leur capacité à résister à l'action simultanée d'un rayonnement ultra-violet, de la température et de l'oxygène dans une phase aqueuse ou gazeuse dans le but d'analyser pour mieux les comprendre les phénomènes de photodégradation et de déterminer les corrélations entre les durées de vie desdits matériaux en photovieillissement accéléré et en vieillissement climatique.

Depuis longtemps, il est connu que les matières polymères exposées aux conditions climatiques naturelles subissent dans le temps une altération de leur nature chimique qui se manifeste, par exemple, par une modification de leur aspect de surface (décoloration, perte de brillance, farinage...) le plus souvent accompagnée dans le temps par une dégradation de leurs caractéristiques mécaniques (résistance a la traction, allongement, résistance au choc, rigidité).

Pour mieux appréhender l'ensemble des phénomènes se manifestant lors de l'exposition de ces matières polymères aux conditions climatiques naturelles, de nombreux dispositifs de simulation ont été proposés pour permettre de reproduire de manière accélérée les effets naturellement constatés sur lesdites matières.

On connaît (brevet FR 2 430 609) un dispositif de photovieillissement accéléré de matières polymères comprenant une enceinte dans laquelle une lampe unique émet un faisceau parallèle de rayonnement ultra-violet de faible section qui irradie un ensemble d'éprouvettes montées sur un porte-échantillons, animé d'un mouvement de translation alternatif dans un plan perpendiculaire à l'axe du faisceau. La température de l'enceinte est régulée de manière à maintenir constante la température des éprouvettes, grâce à des capteurs de température en contact direct avec lesdites éprouvettes.

Un tel dispositif présente des inconvénients qui se révèlent gênants à l'usage. Tout d'abord, les éprouvettes de matières polymères ne sont soumises qu'à une exposition localisée et discontinue au rayonnement ultra-violet en raison du mouvement alternatif du porte-échantillons. De plus, ce dispositif, par sa conception, n'autorise l'irradiation simultanée que d'un petit nombre d'éprouvettes. Enfin, un tel dispositif ne permet une irradiation qu'en atmosphère sèche et, de ce fait, ne permet pas d'étudier les phénomènes de photodégradation en présence d'une phase aqueuse.

On connaît (FR-A-1 314 588) un dispositif de photovieillissement accéléré palliant certains des inconvénients cités plus haut en proposant deux parois coaxiales définissant un espace annulaire dans lequel les échantillons sont suspendus à un organe formant carrousel de telle sorte que les échantillons puissent effectuer un mouvement autour de la source de rayonnement, ainsi qu'autour de leur propre axe vertical. Il reste malgré tout que ce dispositif ne permet qu'un domaine d'essai limité ne permettant pas d'étudier les phénomènes de photodégradation à température variable, et à saturation en oxygène en phase aqueuse.

Or, le photovieillissement accéléré des matières polymères doit impérativement être représentatif des phénomènes climatiques les plus importants, à savoir non seulement les agressions physiques dues à la lumière naturelle et aux variations de température, mais aussi les agressions chimiques dues à la présence d'un milieu aqueux et/ou d'oxygène comme cela se produit quand les matériaux réalisés en matières polymères sont utilisés au contact direct de ces éléments naturels.

Des dispositifs permettant une simulation climatique plus complète grâce à une exposition en milieu humide ont été proposés dans la littérature spécialisée pour le photovieillissement accéléré des matières polymères.

Un premier type de dispositif comporte une enceinte dans laquelle est placée une chambre de rayonnement équipée dans sa partie centrale de trois lampes Xénon de puissance 4,5 kW disposées en triangle, chaque lampe étant munie de miroirs plans métalliques réfléchissants sélectifs pour les ultra-violets, autour desquels sont disposés deux cylindres coaxiaux en quartz, constituant un volume annulaire dans lequel circule un fluide de refroidissement. Placé entre l'enceinte et la chambre de rayonnement ultra-violet se trouve un porte-échantillons de forme cylindrique animé d'un mouvement de rotation continu ou alterné. En outre, le dispositif est muni dans la partie supérieure de l'enceinte de une à trois rampes d'arrosage équipées de trois buses permettant de créer une atmosphère interne humide et/ou une aspersion d'eau sur les éprouvettes. Enfin, le dispositif comprend des moyens permettant de réguler la température régnant dans l' enceinte à partir de la mesure continue de la température d'un corps noir s'y trouvant et de régler par automatisme les cycles d'aspersion des éprouvettes. Un tel dispositif est connu sous le nom de marque XENOTEST 1 200 HERAEUS.

Un autre type de dispositif commercialisé sous la marque HERAEUS XENOTEST 250 T, équipé de moyens de régulation thermique de l'enceinte et de moyens de pulvérisation d'eau et de réglage des cycles de cette pulvérisation analogues au dispositif précédent, comporte un réflecteur de forme parabolique d'axe vertical dont le foyer est muni d'un brûleur Xénon basse pression équipé d'un filtre, les éprouvettes étant disposées à plat sur le plancher horizontal de l'enceinte qui joue ainsi le rôle de porte-échantillons.

L'un et l'autre de ces deux derniers dispositifs présentent à l'usage des inconvénients majeurs.

Pour que le phénomène de dégradation de matières polymères soumises à une irradiation ultra-violette soit significatif et reproductible, il est en premier lieu indispensable que la température propre des échantillons soit maintenue constante tout au long des essais à une valeur bien connue. Or, dans les deux dispositifs précités., la température des échantillons de matière polymère n'est pas mesurée de façon précise car, dans chacun de ces dispositifs, la température de l'enceinte contenant les échantillons est régulée à partir de la mesure de la température d'un corps noir placé dans cette enceinte, température, qui, d'après les propriétés de rayonnement dudit corps, est toujours supérieure à celle des échantillons. De plus, et dans le second dispositif, des sondes à résistance sont disposées sur une réglette placée en contact direct avec le porte-échantillons afin de mesurer au mieux la température des échantillons. Mais, en raison même des écarts de température dus à l'imperfection des contacts thermiques entre les sondes à résistance, le plancher porte-échantillons et les échantillons de matière polymère disposées sur ledit plancher, la température mesurée par les sondes à résistance est différente de celle des matériaux exposés.

En outre, les échantillons de matière polymère utilisés dans le second dispositif sont maintenus en position fixe. Or, comme le rayonnement émis ne peut posséder une répartition parfaitement homogène dans l'ensemble du volume de la chambre d'irradiation, il en résulte que l'intensité lumineuse incidente reçue par les échantillons pendant le temps total de leur irradiation ne peut être égale d'un échantillon à l'autre et qu'une répartition hétérogène de ladite intensité peut être à l'origine de résultats d'essais de vieillissement non significatifs.

Enfin, un dispositif plus particulier a été proposé et consiste en une enceinte parallélépipédique surmontée d'un ensemble de forme prismatique muni de huit tubes fluorescents à rayonnement ultra-violet placés horizontalement quatre par quatre le long des deux faces concourantes de l'ensemble de forme prismatique. Les échantillons à irradier sont alors disposés entre les tubes et les deux faces concourantes précitées. L'espace délimité par lesdites faces concourantes et les échantillons permet d'assurer une circulation naturelle d'air ambiant de refroidissement.

Ce dispositif est également muni dans sa partie inférieure d'une cuve de génération de vapeur d'eau. L'écart de température existant entre la vapeur d'eau et la face interne irradiée des échantillons refroidie par sa face externe grâce à la circulation d'air ambiant est suffisant pour provoquer une condensation de la vapeur d'eau émise et venant au contact de ladite face interne. Le gradient thermique qui s'établit dans l'épaisseur même de l'échantillon ne permet pas de déterminer la température de la matière irradiée. De plus, et tout comme pour le second des dispositifs précédemment décrits, les échantillons placés le long des faces concourantes de l'enceinte sont maintenus en position fixe pendant toute la durée des expérimentations et ne peuvent recevoir de ce fait une quantité de rayonnement égale d'un échantillon à l'autre.

Enfin, ce dispositif est équipé de sources lumineuses émettant dans le domaine 270 à 350 nm qui inclut une zone riche en photons (entre 270 et 300 nm) inexistante dans le spectre solaire. Les courtes longueurs d'onde peuvent créer des phénomènes non représentatifs du vieillissement naturel dans les essais de photovieillissement accéléré de laboratoire, tels que des phénomènes de photopassivation ou de photodégradation accélérées.

Si les trois dispositifs décrits offrent la particularité de permettre l'étude du photovieillissement d'échantillons de matières polymères soumis à l'action d'eau ruisselante ou de vapeur d'eau se condensant directement à leur contact, s'ils permettent également de reproduire simultanément certains effets de lavage par l'eau (entraînement physique et/ou dissolution d'additifs ou de produits chimiques de photodégradation ayant migré à la surface des éprouvettes) et certains effets mécaniques, ils ne permettent pas de reproduire et de comprendre le rôle chimique de l'eau au cours de l'irradiation ni même son rôle éventuel de solvant d'extraction. De même, l'on constate que certaines matières engendrent, sous l'action d'une photo-oxydation des groupements organiques fonctionnels particulièrement sensibles à l'action de l'eau et par réaction d'hydrolyse, une rupture des chaînes moléculaires accompagnée d'une dégradation des propriétés mécaniques de ladite matière.

L'effet de l'eau, pour être significatif, doit être caractérisé par la présence d'un film d'eau maintenu en contact direct et permanent avec la matière polymère pendant toute la durée de l'irradiation, la concentration en oxygène de ladite eau étant elle-même contrôlée et maintenue à une valeur constante. Or, les dispositifs précédemment décrits ne permettent pas d'assurer en permanence la présence d'un film d'eau d'épaisseur déterminée sur toute la surface de l'éprouvette irradiée.

Ainsi, une éprouvette réalisée à l'aide d'une mince lame de polyamide très hygroscopique, soumise de façon séquentielle à un arrosage par pulvérisation dans une enceinte de photovieillissement portée elle-même à une température comprise entre 40 et 70° C, présente une surface sèche quelques minutes après la fin de l'arrosage.

En raison des inconvénients précités, la Demanderesse a étudié puis mis au point un dispositif de photovieillissement accéléré de matériaux contenant des matières polymères, permettant de soumettre des échantillons de ces matériaux à l'action simultanée d'un rayonnement ultra-violet, de la température et de l'oxygène dans une phase aqueuse ou gazeuse dans le but de pouvoir analyser et interpréter les phénomènes de photodégradation.

A cet effet, il est proposé un dispositif de photovieillissement accéléré de matériaux contenant des matières polymères, qui comporte :
a) une enceinte externe de forme polyédrique, ou cylindrique possédant un axe de symétrie vertical ;
b) une source de rayonnement ultraviolet ;
c) deux parois cylindriques parallèles constituant les parois latérales d'une cuve en forme de couronne coaxiale à l'enceinte externe fermée dans sa partie inférieure et ouverte dans sa partie supérieure, dont la partie centrale évidée permet la mise en place axiale d'un porte-échantillons, les parois étant transparentes aux radiations de la source ; les parois cylindriques délimitant un espace annulaire dans lequel se trouvent une phase aqueuse dans laquelle peuvent être immergés les échantillons à tester, suspendus au porte-échantillons ;
d) un porte-échantillons de révolution disposé coaxialement à la cuve et à l'enceinte, animé d'un mouvement uniforme de rotation autour de son axe vertical ;
e) des moyens tels que ventilateur permettant d'assurer la circulation d'une phase gazeuse à l'intérieur de l'enceinte externe ;
la source de rayonnement ultraviolet étant située dans l'enceinte externe.

Le dispositif comporte en outre :
- des moyens permettant d'assurer la circulation de la phase aqueuse à l'intérieur de l'espace annulaire de la cuve ;
- des moyens permettant de régler la température de cette phase aqueuse ;
- des moyens permettant d'assurer la saturation en oxygène de la phase aqueuse ;
- des moyens permettant de régler la température des échantillons sous exposition ;
enfin la température régnant dans l'enceinte externe est contrôlée par une sonde de température en contact avec un échantillon de référence sous irradiation non immergé dans la phase aqueuse et reliée aux moyens permettant de la réguler par rapport à une valeur de consigne ; les moyens permettant de régler la température de la phase gazeuse comportent au moins deux et préférentiellement au moins trois ventilateurs d'introduction d'air et au moins un ventilateur d'extraction d'air ; la température des échantillons sous irradiation immergés dans la phase aqueuse est contrôlée et réglée à partir d'une valeur de consigne par la température de l'eau circulante ; la source de rayonnement ultraviolet comprend au moins quatre lampes à vapeur de mercure moyenne pression émettant des radiations de longueurs d'ondes comprises entre 290 et 450 nm, réparties de manière régulière à la périphérie de l'enceinte externe ; les parois cylindriques de la cuve sont transparentes aux radiations au moins égales à 295 ± 5 nm et sont en verre de borosilicate.

Dans le cas où l'on irradie la échantillons uniquement en atmosphère gazeuse, ladite paroi cylindrique est ouverte à au moins l'une de ses deux extrémités pour permettre une circulation de la phase gazeuse.

Dans le cas où les échantillons sont irradiés alors qu'ils sont immergés dans une phase aqueuse, l'espace annulaire dans lequel sont placés la échantillons suspendus au porte-échantillons a une section constante et permet de maintenir de façon permanente un volume de liquide d'épaisseur contrôlée au contact de l'échantillon qui peut être partiellement et/ou totalement immergé dans ledit liquide.

La distance entre les deux parois cylindriques parallèles est telle qu'elle assure l'existence d'un film d'eau sur les échantillons. Cette distance est souvent comprise entre 5 et 50 et préférentiellement entre 10 et 30 millimètres.

Ces parois sont généralement réalisées en un matériau optique tel que verre de borosilicate transparent aux radiations ultra-violettes de longueurs d'ondes au moins égales à 295 ± 5 nm.

Pour que les échantillons subissent une irradiation très homogène, le port-échantillons est animé d'un mouvement de rotation uniforme à vitesse lente afin que chaque échantillon se déplaçant régulièrement pendant la durée de l'irradiation sur le périmètre de la paroi cylindrique reçoive une même quantité de flux lumineux.

Le dispositif selon l'invention est également muni d'un moyen placé hors de l'enceinte, permettant d'assurer une circulation continue de la phase aqueuse dans l'espace annulaire de la couronne. La température de ladite phase aqueuse est régulée par tout moyen connu tel que échangeur thermique, thermostat, à la valeur choisie par l'homme de l'art. Cette température permet ainsi de fixer et de contrôler de manière très précise la température propre des échantillons.

L'oxygène présent dans la phase aqueuse est, au cours de l'irradiation, consommé en tout ou partie par réaction photochimique au contact de la matière polymère. Cet oxygène doit être renouvelé de telle manière que sa concentration dans la phase aqueuse au contact des échantillons reste approximativement constante dans le temps. Un moyen approprié, tel que par exemple un brassage énergique, une insufflation d'air ou d'oxygène, placé à l'extérieur de l'enceinte, permet de maintenir la teneur en oxygène de la phase aqueuse en circulation à sa valeur de saturation.

Les sources émettrices de rayonnement ultra-violet sont disposées de façon régulière sur la périphérie de l'enceinte externe. Lesdites sources sont préférentiellement des lampes à arcs à vapeur de mercure moyenne pression émettant une lumière riche en photons de longueurs d'ondes comprises entre 290 et 450 nm. La distance la plus courte entre le brûleur d'une lampe et un échantillon peut être choisie dans l'intervalle de 7 à 50 centimètres, et de préférence voisine de 20 centimètres. Cet intervalle préférentiel est adopté par l'homme de métier en vue d'accroître l'efficacité du rayonnement ultra-violet et de raccourcir ainsi la durée d'exposition des échantillons en augmentant le facteur d'accélération de photodégradation.

Le nombre de sources émettrices de rayonnement ultra-violet est généralement d'au moins quatre. Mais il peut être supérieur afin de permettre une augmentation du flux lumineux et provoquer par voie de conséquence une augmentation de la vitesse de photo-oxydation. Ainsi, l'augmentation du nombre de sources émettrices, par exemple de quatre à six sources émettrices, permet d'accroître le facteur d'accélération du dispositif de vieillissement, et ce d'autant plus que la température autorisée est plus importante.

La température régnant à l'intérieur de l'enceinte externe, c'est-à-dire dans la phase gazeuse, est contrôlée et régulée par rapport à une valeur de consigne au moyen, par exemple d' une sonde de température en contact avec un échantillon de référence non immergé dans la phase aqueuse et représentatif de tous les échantillons irradiés simultanément. Dans ce but, le dispositif selon l'invention comporte au moins deux et préférentiellement au moins trois ventilateurs d'introduction et au moins un ventilateur d'extraction d'air disposés sur les parois de l'enceinte externe. La mise en route et l'arrêt de ces ventilateurs sont commandés par tout moyen connu de l'homme de l'art, tel que régulateur comparant la température mesurée à celle d'une température de consigne. Il est ainsi possible de maintenir la température de la phase gazeuse contenue dans l'enceinte à la valeur de consigne en introduisant dans l'enceinte de l'air frais prélevé dans l'atmosphère externe et, pendant le même temps, en en extrayant de l'air chaud.

La température des échantillons sous exposition en phase gazeuse est alors contrôlée et régulée à partir de cette valeur de consigne au moyen de ladite sonde de température. Dans le cas où les échantillons sont immergés dans la phase aqueuse, leur température est contrôlée et régulée à partir d'une valeur de consigne par la température de l'eau circulante.

Le porte-échantillons se compose de trois pièces constitutives principales qui sont un arbre, un moyen d'entraînement en rotation et au moins un plateau. L'arbre est positionné verticalement et coaxialement à l'axe de la cuve. Il est muni à son extrémité inférieure d'un moyen permettant de l'entraîner en rotation et à son extrémité supérieure d'un plateau circulaire de diamètre sensiblement égal à celui de la couronne. Des moyens de fixation des échantillons sont disposés sur la périphérie du plateau circulaire à intervalles réguliers. Chaque échantillon est ainsi suspendu au plateau en position verticale, son extrémité inférieure pouvant rester libre.

Selon une variante, des charges de valeur déterminée peuvent être fixées sur la partie inférieure de chaque échantillon de façon à les maintenir en traction contrôlée pendant le temps d'irradiation. Il est ainsi possible de procéder à l'étude du photovieillissement de matières polymères en traction, afin de rendre plus précoce la dégradation des propriétés mécaniques des échantillons ainsi irradiés.

Selon une autre variante et plus généralement dans le cas d'une exposition en phase aqueuse, chaque échantillon peut être inséré dans un support approprié suspendu au plateau circulaire.

Selon une autre variante et dans le cas où l'irradiation est pratiquée en phase gazeuse, le porte-échantillons peut être muni d'un deuxième plateau situé entre le moyen d'entraînement et le plateau supérieur et pouvant coulisser sur l'arbre.

La vitesse de rotation du porte-échantillons est généralement choisie dans l'intervalle de 1 à 8 et préférentiellement de 3 à 5 tours par minute.

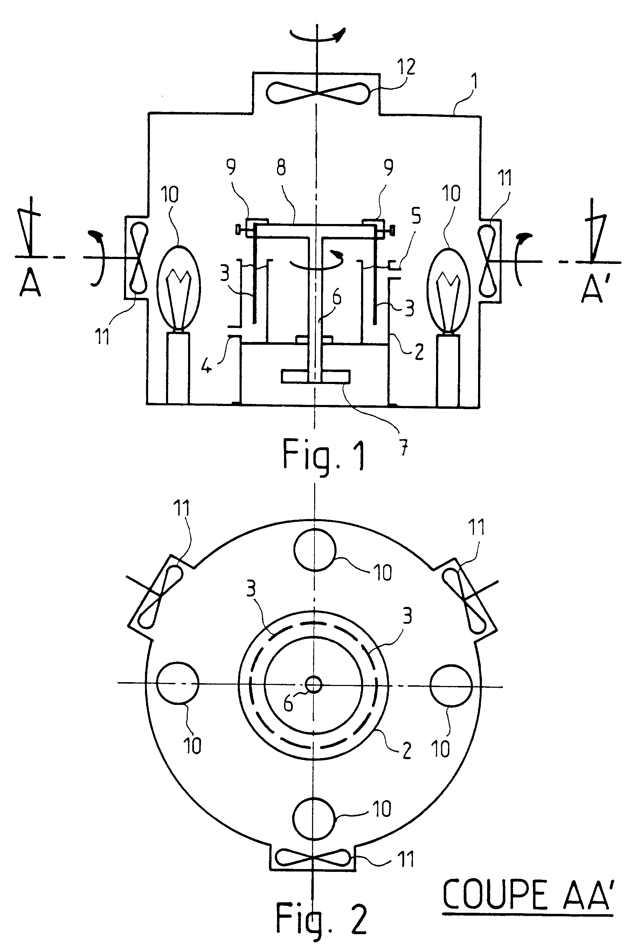

Le dispositif selon l'invention sera mieux compris à l'aide des deux figures suivantes données à titre illustratif. La figure 1 est une vue en élévation et la figure 2 une vue en coupe du dispositif selon A-A'.

Ledit dispositif comporte :
- une enveloppe externe (1) qui, sur la figure 2, présente une forme cylindrique mais qui, selon l'invention, peut revêtir toute autre forme polyédrique de révolution autour d'un axe vertical,
- une cuve (2) à double paroi dans laquelle circule la phase aqueuse dans l'espace annulaire délimité par les deux enveloppes cylindriques qui la constituent. L'extrémité supérieure de l'espace annulaire est libre de façon à permettre la mise en place et la rotation des échantillons (3). Des tubulures (4) et (5) solidaires de la cuve (2) sont reliées à des moyens appropriés situés à l'extérieur de l'enceinte et non représentés, qui permettent de maintenir dans l'espace annulaire de la cuve (2) une circulation permanente de la phase liquide à une température et une concentration en oxygène réglées aux valeurs souhaitées,
- un porte-échantillons constitué par un arbre (6) muni à sa partie inférieure d'un moyen (7) permettant de l'entraîner en rotation et solidaire à sa partie supérieure d'un plateau (8) portant à sa périphérie des machoires (9) sur lesquelles sont fixés des porte-échantillons dans lesquels sont insérés les échantillons (3),
- un ensemble de quatre lampes à vapeur de mercure moyenne pression (10) émettant un rayonnement ultra-violet riche en photons de longueurs d'ondes au moins égales à 295 ± 5 nm,
- un ensemble de quatre ventilateurs (11) et (12), dont trois (11) assurant l'introduction d'air frais, sont disposés sur les parois latérales de l'enceinte et le quatrième (12) assurant l'extraction de l'air chaud est placé sur son couvercle. La mise en route et l'arrêt de ces ventilateurs sont asservis à un régulateur de température (non représenté) grâce à la mesure de la température d'un échantillon de référence non immergé dans la phase liquide au moyen d'un capteur thermométrique (sonde platine ou thermocouple ou autres moyens) non représenté.

## Revendications

1. Dispositif de photovieillissement accéléré de matériaux contenant des matières polymères, qui comporte :
a) une enceinte externe (1) de forme polyédrique, ou cylindrique possédant un axe de symétrie vertical ;
b) une source de rayonnement ultraviolet (10) ;
c) deux parois cylindriques parallèles constituant les parois latérales d'une cuve (2) en forme de couronne coaxiale à l'enceinte externe fermée dans sa partie inférieure et ouverte dans sa partie supérieure, dont la partie centrale évidée permet la mise en place axiale d'un porte-échantillons, lesdites parois étant transparentes aux radiations de la source (10) ; les parois cylindriques délimitant un espace annulaire dans lequel se trouvent une phase aqueuse dans laquelle peuvent être immergés les échantillons (3) à tester, suspendus au porte-échantillons (6, 7, 8, 9) ;
d) un porte-échantillons (6, 7, 8, 9) de révolution disposé coaxialement à la cuve (2) et à l'enceinte (1), animé d'un mouvement uniforme de rotation autour de son axe vertical ;
e) des moyens tels que ventilateur (11, 12) permettant d'assurer la circulation d'une phase gazeuse à l'intérieur de l'enceinte externe (1) ;
caractérisé d'une part en ce que la source de rayonnement ultraviolet (10) est située dans l'enceinte externe (1) ; d'autre part, en ce qu'il comporte :
- des moyens (4, 5) permettant d'assurer la circulation de la phase aqueuse à l'intérieur de l'espace annulaire de la cuve (2) ;
- des moyens permettant de régler la température de cette phase aqueuse ;
- des moyens permettant d'assurer la saturation en oxygène de la phase aqueuse ;
- des moyens permettant de régler la température des échantillons (3) sous exposition ;
enfin par le fait que la température régnant dans l'enceinte externe (1) est contrôlée par une sonde de température en contact avec un échantillon de référence sous irradiation non immergé dans la phase aqueuse et reliée aux moyens permettant de la réguler par rapport à une valeur de consigne ; les moyens permettant de régler la température de la phase gazeuse comportent au moins deux et préférentiellement au moins trois ventilateurs d'introduction d'air (11) et au moins un ventilateur d'extraction d'air (12) ; la température des échantillons sous irradiation immergés (3) dans la phase aqueuse est contrôlée et réglée à partir d'une valeur de consigne par la température de l'eau circulante ; la source de rayonnement ultraviolet comprend au moins quatre lampes à vapeur de mercure moyenne pression (10) émettant des radiations de longueurs d'ondes comprises entre 290 et 450 nm, réparties de manière régulière à la périphérie de l'enceinte externe (1); les parois cylindriques de la cuve (2) sont transparentes aux radiations au moins égales à 295 ± 5 nm et sont en verre de borosilicate.

2. Dispositif de photovieillissement accéléré selon la revendication 1, caractérisé en ce que la distance entre les deux parois cylindriques transparentes de la cuve (2) est comprise entre 5 et 50 millimètres et préférentiellement entre 10 et 30 millimètres.

3. Dispositif de photovieillissement accéléré selon l'une quelconque des revendications 1 et 2, caractérisé en ce que le porte-échantillons comprend un arbre (6) coaxial à la cuve (2) muni dans sa partie inférieure d'un moyen d'entraînement en rotation (7) et à son extrémité supérieure d'un plateau (8) auquel sont suspendus les échantillons (3).

4. Dispositif de photovieillissement accéléré selon la revendication 3, caractérisé en ce que, pour fonctionner en vue d'une irradiation en phase gazeuse, le porte-échantillons (6, 7, 8, 9) est muni d'un deuxième plateau pouvant coulisser sur l'arbre (6) et situé entre le moyen d'entraînement (7) et le plateau supérieur (8).

5. Dispositif de photovieillissement accéléré selon l'une quelconque des revendications 1 à 4, caractérisé en ce que le porte-échantillons (6, 7, 8, 9) est animé d'une vitesse de rotation comprise entre 1 et 8 tours par minute et préférentiellement de 3 à 5 tours par minute.

6. Dispositif de photovieillissement accéléré selon l'une quelconque des revendications 1 à 5, caractérisé en ce que la distance la plus courte entre le brûleur d'une source de rayonnement (10) et l'échantillon (3) est choisie dans l'intervalle de 7 à 50 centimètres.

## Claims

1. Device for the accelerated photoageing of materials containing polymer substances and comprising :
a) an external polyhedral or cylindrical-shaped chamber (1) possessing a vertical axis of symmetry ;
b) an ultraviolet radiation source (10) ;
c) two parallel cylindrical walls constituting the lateral walls of a ring-shaped tank (2) coaxial to the external chamber closed at its lower portion and open at its upper portion and whose central portion is recessed to allow for the axial placing of a sample holder, said walls being transparent to the radiations from the source (10), the cylindrical walls delimiting an annular space in which an aqueous phase is located in which the samples (3) to be tested can be immersed suspended from the sample holder (6, 7, 8, 9) ;
d) a rotatable sample holder (6, 7, 8, 9) disposed coaxially to the tank (2) and the chamber (1) and driven by a uniform movement of rotation around its vertical axis ;
e) means, such as a ventilator (11, 12), enabling a gaseous phase to be circulated inside the external chamber (1) ;
characterized in that the ultraviolet source (10) is situated inside the external chamber (1) and in that it comprises:
- means (4, 5) enabling the aqueous phase to be circulated inside the annular space of the tank (2) ;
- means enabling the adjustment of the temperature of said aqueous phase;
- means enabling the saturatation of the aqueous phase with oxygen ;
- means enabling the adjustment of the temperature of the samples (3) under exposure ;
finally by the fact that the temperature existing in the external chamber (1) is controlled by a temperature probe in contact with a reference sample under radiation exposure not immersed in the aqueous phase and connected to the means for adjusting it with respect to a controlled variable value, the means able to adjust the temperature of the gaseous phase comprising at least two and preferably at least three air introduction ventilators (11) and at least one air extraction ventilator (12), the temperature of the samples (3) under radiation exposure immersed in the aqueous phase being controlled and adjusted on the basis of a controlled variable value by the temperature of the circulating water, the ultraviolet radiation source including at least four average pressure mercury vapor lamps (10) emitting wavelength radiations of between 290 and 450 nm distributed regularly at the periphery of the external chamber (1), the cylindrical walls of the tank (2) being transparent to radiations equal at least to 295 ± 5 nm and being made of borosilicate glass.

2. Accelerated photoageing device according to claim 1, wherein the distance between the two transparent cylindrical walls of the tank (2) is between 5 and 50 millimeters and preferably between 10 and 30 millimeters.

3. Accelerated photoageing device according to claim 1 or 2, wherein the sample holder includes a shaft (6) coaxial to the tank (2) fitted at its lower portion with a rotation drive device (7) and at its upper extremity with a plate (8) from which the samples (3) are suspended.

4. Accelerated photoageing device according to claim 3, wherein, so as to function for irradiating in a gaseous phase, the sample holder (6, 7, 8, 9) is provided with a second plate able to slide on the shaft (6) and situated between the drive device (7) and the upper plate (8).

5. Accelerated photoageing device according to any one of claims 1 to 4, wherein the sample holder (6, 7, 8, 9) is driven with a speed of rotation of between 1 and 8 revolutions per minute and preferably of between 3 and 5 revolutions per minute.

6. Accelerated photoageing device according to any one of claims 1 to 5, wherein the shortest distance between the burner of a radiation source (10) and the sample (3) is selected as being between 7 and 50 centimeters.

## Patentansprüche

1. Vorrichtung zur beschleunigten Alterung durch Licht von polymerhaltigem Material, bestehend aus
a) einem vieleckigen oder zylinderförmigen Außengehäuse (1) mit senkrechter Symmetrieachse,
b) einer Strahlenquelle (10) für ultraviolette Strahlen,
c) zwei parallelen, zylindrischen Wänden, die die Seitenwände einer zum Außenbehälter koaxial ausgerichteten, kranzförmigen Wanne (2) bilden, die auf ihrer Unterseite geschlossen auf der Oberseite offen ist und in deren hohler Mitte axial eine Prüflingshalterung angebracht werden kann, wobei die ultravioletten Strahlen der Strahlenquelle (2) durch die Seitenwände hindurchgelangen können und die zylindrischen Seitenwände einen ringförmigen Bereich beschreiben, in dem sich eine wäßrige Phase befindet, in die die zu testenden, an der Prüflingshalterung (6, 7, 8, 9) aufgehängten Prüflinge (3) eingetaucht werden können,
d) einer drehbaren Prüflingshalterung (6, 7, 8, 9), die koaxial zur Wanne (2) und zum Außenbehälter (1) angeordnet ist und eine gleichmäßige Drehbewegung um ihre senkrechte Achse ausführt,
e) Mittel wie z.B. Ventilatoren (11, 12) zum Durchwirbeln einer Gasphase im Inneren des Außenbehälters (1),
dadurch gekennzeichnet, daß sich einerseits die Strahlenquelle (10) für Ultraviolette Strahlung in dem Außengehäuse (1) befindet und andererseits die Vorrichtung folgende Bauteile besitzt:
- Mittel (4, 5) zur Gewährleistung des Umlaufens der wäßrigen Phase im Inneren des ringförmigen Bereichs der Wanne (2),
- Mittel zur Regulierung der Temperatur der wäßrigen Phase,
- Mittel zur Gewährleistung der Sättigung des Sauerstoffgehaltes in der wäßrigen Phase,
- Mittel zum Einstellen der Temperatur der der Strahlung ausgesetzten Prüflinge (3),
sowie dadurch, daß die in dem Außenbehälter (1) herrschende Temperatur durch einen Wärmefühler gemessen wird, der mit einem nicht in die wäßrige Phase eingetauchten Referenzmuster Kontakt hat und mit Mitteln verbunden ist, über die sie in Bezug auf einen vorgegebenen Sollwert eingestellt werden kann, wobei die Mittel zur Einstellung der Temperatur der Gasphase mindestens zwei, vorzugsweise mindestens drei Ventilatoren zum Einblasen von Luft (11) und mindestens einen Ventilator zum Ausblasen von Luft (12) besitzen, die Temperatur der in der wäßrigen Phase eingetauchten, der Strahlung ausgesetzten Prüflinge (3) in Bezug auf einen Sollwert für die Temperatur des umlaufenden Wassers überwacht und eingestellt wird, die Strahlenquelle für ultraviolette Strahlung mindestens aus vier Quecksilberdampflampen (10) mittleren Drucks besteht, welche Strahlen einer Wellenlänge zwischen 290 und 450 nm gleichmäßig über den gesamten Bereich des Außenbehälters (1) ausstrahlen, die zylindrischen Seitenwände der Wanne (2) Strahlen durchlassen, deren Wellenlänge mindestens 295 ±5 nm beträgt und aus Borsilikatglas bestehen.

2. Vorrichtung zur beschleunigten Alterung nach Patentanspruch 1, dadurch gekennzeichnet, daß der Abstand zwischen den beiden transparenten zylindrischen Seitenwänden der Wanne (2) zwischen 5 und 50 Millimeter, vorzugsweise zwischen 10 und 30 mm beträgt.

3. Vorrichtung zur beschleunigten Alterung nach Patentanspruch 1 und 2, dadurch gekennzeichnet, daß die Prüflingshalterung eine koaxial zur Wanne (2) angeordnete Welle (6) besitzt, die an ihrer Unterseite ein Mittel zu ihrem Antrieb in Drehrichtung (7) und an ihrer Oberseite eine Scheibe (8) aufweist, an der die Prüflinge (3) aufgehängt sind.

4. Vorrichtung zur beschleunigten Alterung nach Patentanspruch 3, dadurch gekennzeichnet, daß zum Ermöglichen eines Bestrahlens der Prüflinge in der Gasphase die Prüflingshalterung (6, 7, 8, 9) eine zweite, auf die Welle (6) aufschiebbare Scheibe besitzt, die sich zwischen dem Antriebsmittel (7) und der oberen Scheibe (8) befindet.

5. Vorrichtung zur beschleunigten Alterung nach Patentanspruch 1 bis 4, dadurch gekennzeichnet, daß die Prüflingshalterung (6, 7, 8, 9) mit einer Drehgeschwindigkeit im Bereich zwischen 1 und 8 Umdrehungen pro Minute, vorzugsweise zwischen 3 und 5 Umdrehungen pro Minute angetrieben wird.

6. Vorrichtung zur beschleunigten Alterung nach Patentanspruch 1 bis 5, dadurch gekennzeichnet, daß der geringste Abstand zwischen dem Brenner einer Strahlenquelle (3) und einem Prüfling (3) im Bereich zwischen 7 und 50 Zentimeter beträgt.
